# FASCICULE DE BREVET EUROPEEN

(11) **EP 2 462 345 B1**
(45) Date de publication et mention de la délivrance du brevet: **09.10.2013**
(21) Numéro de dépôt: 10752860.6
(22) Date de dépôt: 02.08.2010
(51) Int. Cl.: F03G 6/04

(54) **SYSTEME DE PRODUCTION ET DE STOCKAGE D'ENERGIE ELECTRIQUE ET THERMIQUE A PARTIR D'UNE CYCLOTURBINE**
SYSTEM ZUR HERSTELLUNG UND SPEICHERUNG VON ELEKTRISCHER UND THERMISCHER ENERGIE AUS EINER CYCLOTURBINE
SYSTEM FOR PRODUCING AND STORING ELECTRICAL AND THERMAL ENERGY FROM A CYCLOTURBINE

(30) Priorité: 03.08.2009 FR 0903829
(43) Date de publication de la demande: 13.06.2012
(73) Titulaire: Ugolin, Nicolas, 75002 Paris (FR)
(72) Inventeur: Ugolin, Nicolas, 75002 Paris (FR)
(74) Mandataire: Desaix, Anne
(86) Numéro de dépôt international: PCT/FR2010/000559
(87) Numéro de publication internationale: WO 2011/015727

(56) Documents cités:
- EP-A1- 1 961 956
- WO-A2-2006/098662
- FR-A1- 2 307 982
- FR-A1- 2 877 058

## Description

Les deux principaux types de production d'énergie électrique à partir du rayonnement solaire sont les procédés photovoltaïques et les procédés thermo-solaires. Les procédés photovoltaïques sont les plus répandus, mais présentent le désavantage d'être coûteux avec des rendements de conversion énergétique inférieur à 24 %, et cela même pour les procédés les plus novateurs tel que Nanosolar. A côté de ces procédés photovoltaïques les procédés thermo-solaires ont de meilleurs rendements de l'ordre de 30%, en revanche ils sont plus encombrants et adaptés pour une production importante d'électricité. De nouveaux dispositifs couplant un moteur Stirling avec un concentrateur, sont actuellement développés pour produire du courant électrique. Toutefois, l'utilisation de gaz rares tels que l'argon pour améliorer le rendement de ces machines, les rendent plus coûteux et relativement fragiles.

Les turbines sont des machines thermiques robustes qui offrent parmi les meilleurs rendements de conversion, de l'ordre de 30 à 36 %. De plus, ces machines offrent en général d'importantes possibilités de cogénération, ce que ne permettent pas les installations photovoltaïques et très difficilement les moteurs Stirling solaires en raison de la géométrie des installations. En revanche, la géométrie générale des turbines impose des dimensions importantes est difficilement compatible avec de petites et moyennes installations solaires, notamment dans le cadre de l'utilisation de cheminées solaires. Or l'augmentation des rendements passe surtout pour de petites unités par la récupération des énergies thermiques perdues lors des différents processus. De plus, quelquesoit le mode de production d'énergie solaire, l'adaptation rapide et réactive à la demande en énergie ainsi qu'à la versatilité de la source, nécessite 1) soit de stocker l'énergie électrique pour la redistribuer au moment de forte demande, 2) soit de monopoliser rapidement de nouvelles unités de production. La première solution est le plus souvent celle utilisée pour de petites installations, la seconde solution est utilisée pour des installations de plus grande envergure, notamment en croisant des moyens de production d'origines différentes, par exemple solaire éolien ou solaire hydraulicité. Toutefois cette dernière solution de compensation est de plus en plus utilisée sur de petites installations, en couplant électriquement plusieurs sources de productions, par l'intermédiaire d'un onduleur. Ces dispositifs posent toutefois un problème de rendement de restitution de l'énergie et de conversion de courants de natures différentes vers un même collecteur. De plus, dans ces conditions de couplage électrique, une grande partie de l'énergie thermique est perdue sans être convertie en une énergie utile.

FR 2307982 A est consideré comme l'état de la technique le plus proche de la revendication 1.

Nous décrivons un nouveau système thermo-solaire applicable à de petites et moyennes unités de production. Ce dispositif met en jeu une nouvelle géométrie de turbine fonctionnant à l'énergie solaire couplée aux dispositifs qui permettent la production d'électricité concomitante à une cogénération de chaleur et éventuellement de froid, ainsi que le stockage de ces énergies. De plus, la géométrie des éléments du dispositif thermo- solaire permet un couplage hydraulique simple avec d'autres types d'unités de production électrique tels que les éoliennes et les hydroliennes.

### Principe de fonctionnement

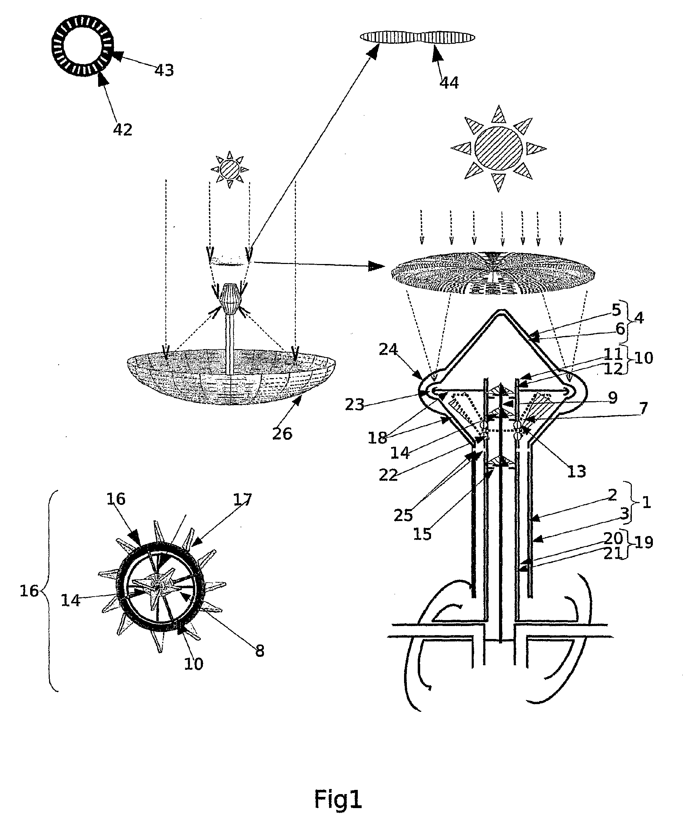

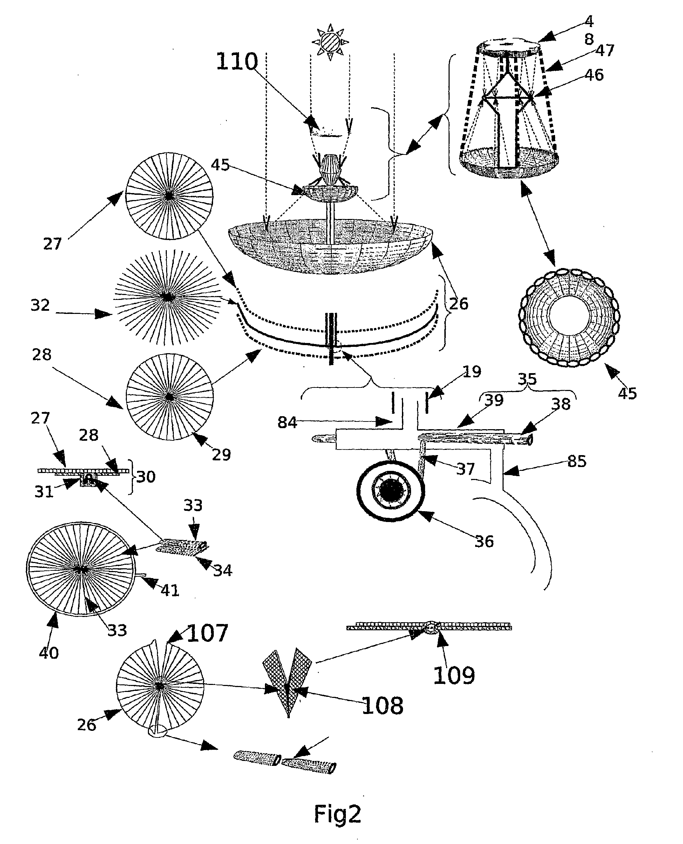

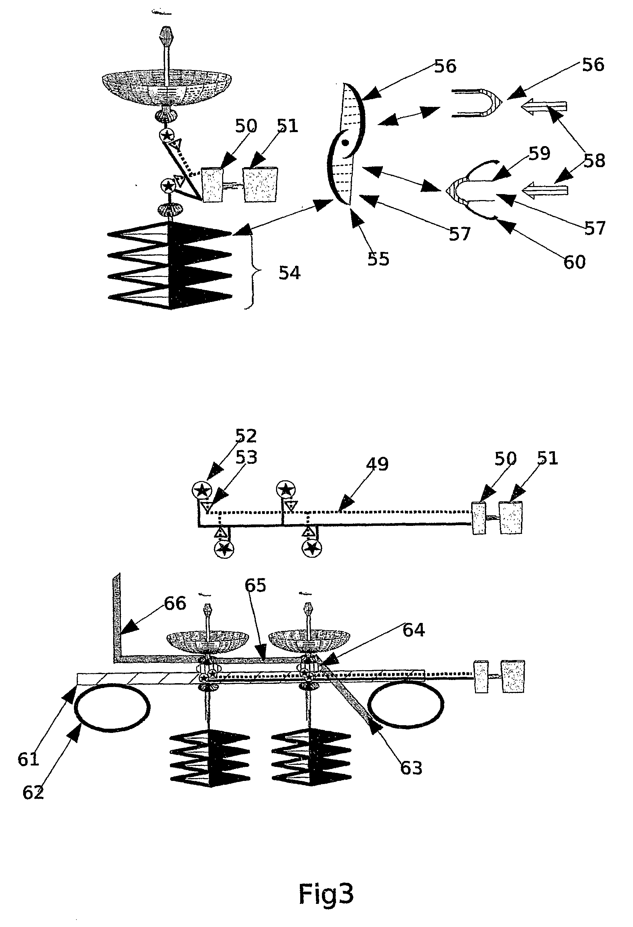

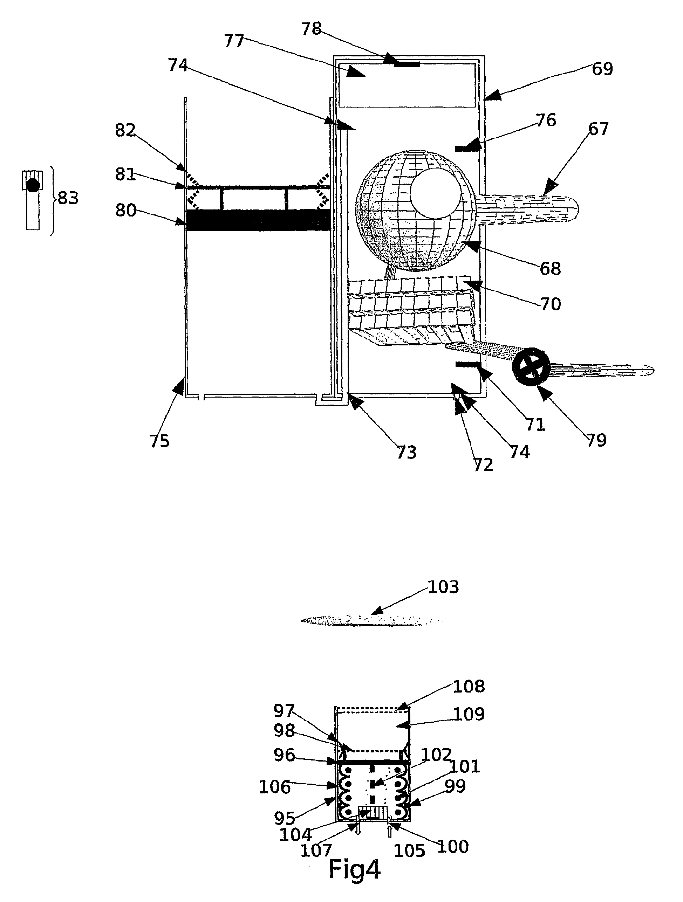

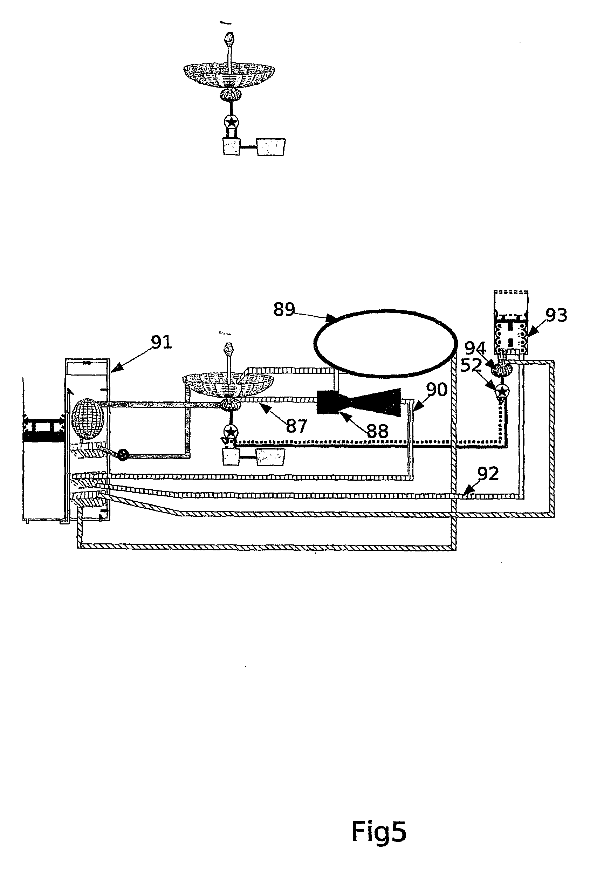

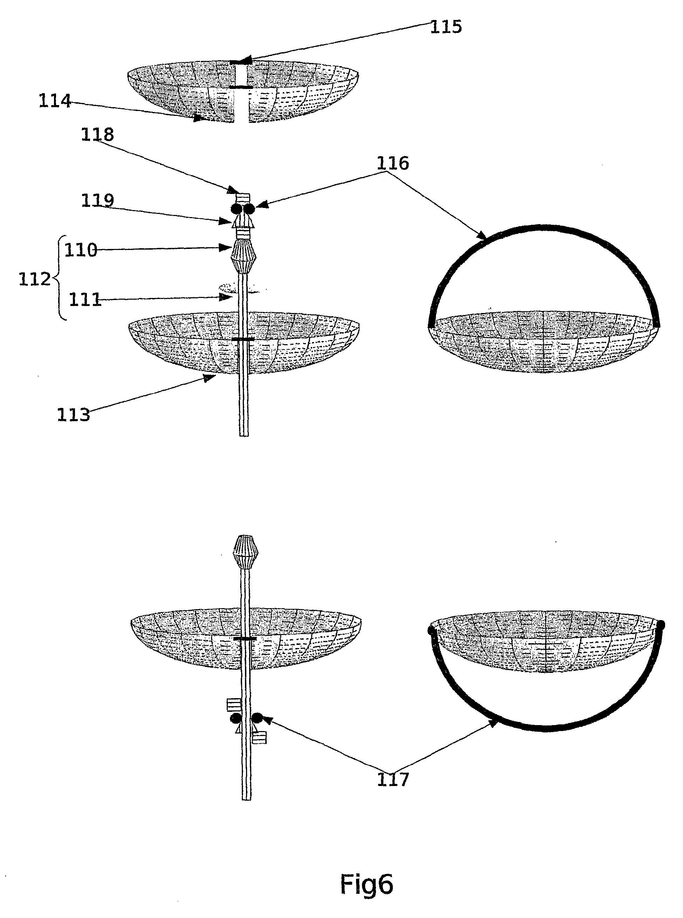

L'invention consiste en un procédé et en des dispositifs organisant une série d'unités fonctionnelles permettant de produire et de stocker de l'énergie électrique et calorifique (froid/chaud).
1.1 Le procédé consiste,
   a) durant une phase utilisant le rayonnement solaire (phase lumineuse), à accélérer un gaz au travers d'une turbine solaire cyclonique ou cycloturbine puis à utiliser l'énergie cinétique et thermique dudit gaz pour produire de l'électricité, et à refroidir, voire liquéfier, ledit le gaz en accumulant une partie de sa chaleur dans des réservoirs d'eau et/ou d'acétate de sodium, puis à stocker l'énergie du rayonnement solaire, en une énergie potentielle par chauffage dudit gaz dans des conditions de volume variable dans un accumulateur thermique solaire ; et
   b) durant une phase indépendante du rayonnement (phase sombre), où l'énergie cinétique et thermique stockées dans le gaz dans des conditions de volume variable et dans le réservoir contenant l'eau ou l'acétate de sodium, sont utilisées pour produire de l'énergie électrique et thermique.
2.1 Dans un mode de réalisation préférentiel, l'accélération et le chauffage du gaz sont assurés par une turbine cyclonique, qui comprend un concentrateur solaire, constituée d'un déflecteur, qui peut être par exemple de forme parabolique, concave, ellipsoïdale, plane, etc..., réfléchissant la lumière sur un système de tubes emboîtés reliés à une structure conique, dans lesquels circule le gaz à accélérer. Le système de tubes est constitué pour sa partie la plus extérieure d'un premier tuyau externe Fig1.1
   Le tuyau externe est surmonté et fermé par une enceinte conique inversée de façon à former une structure cyclonique inversée Fig1.4. A l'entrée du cycloneinversé est disposé un rouet Fig1.7 dont la partie centrale est percée d'un trou Fig1.8. Au centre du trou central du rouet est disposé un axe solidaire du rouet Fig1.9 se prolongeant d'une part, dans le premier tiers du cyclone et d'autre part, au centre du tuyau externe. Dans le premier tiers du cyclone en position centrale est disposé un tuyau autour de l'axe du rouet constituant le tuyau d'axeFig1.10. Le rouet prend appui à sa base (partie évasée) sur le tuyau d'axe qui comprendra à ce niveau des moyens permettant la rotation du rouet, tels qu'un roulement à billes Fig1.13. Le tuyau d'axe permettra de capter le flux central sortant du cyclone. La partie de l'axe de rouet inclus dans le tuyau d'axe comprendra des hélices ou aubes disposées en rotor à un ou plusieurs étages Fig1.4. En vis-à-vis des aubes du ou des rotors, des aubes fixes Fig1.5 sont disposées sur la face intérieure du tuyau d'axe de manière à former des stators pour les rotors. L'ensemble tube d'axe et axe de rouet plus aubes forment ainsi une turbine Fig1.16, de telle sort que l'axe de rouet en tournant entraîne le rouet. Les ailettes disposées sur le rouet Fig1.17 et les aubes Fig1.14 de l'axe de rouet seront orientées en sens inverse de telle manière qu'en tournant les ailettes du rouet fassent pénétrer et compriment le gaz à l'intérieur du cyclone, la rotation du rouet étant obtenue alors par l'action des gaz, sortant du cyclone, sur les aubes de la turbine centrale du cyclone. Le rouet est caréné dans une structure complémentaire Fig1.18 reliant d'une part le tuyau externe au bord du cyclone et d'autre part le bord du cyclone au bord du tuyau de d'axe. Le sommet du rouet (partie la plus étroite ) prend appui sur un tuyau de sortie de cyclone Fig1.19, disposé au centre du tuyau externe et qui entoure l'axe de rouet, de telle manière que le rouet puisse tourner grâce à des moyens introduits au niveau de ce tuyau de sortie de cyclone tels que des roulements à billes Fig1.22. Au niveau de la jointure entre le carénage du rouet et le cyclone sont disposés des conduits obliques plus ou moins en forme de U Fig1.23, de quelques dizaines de microns à plusieurs centimètres de diamètre. Ces conduits permettent au gaz provenant du tuyau externe et comprimé par le rouet de passer dans le cyclone tout en étant fortement échauffé par le rayonnement solaire. L'orientation des conduits permettra d'orienter et d'impulser au gaz entrant dans le cyclone, un tournoiement qui induit un vortex vers le sommet du cône formant le cyclone Fig1.4. Arrivé au sommet du cône, le gaz s'organise en une colonne qui se dirigera alors vers le tuyau d'axe où il s'engouffrera en actionnant la turbine centrale du cyclone. La paroi externe des conduits obliques sera noire (de peinture noire, Chrome noir, CERMET). Les conduits obliques pourront être en métal mais préférentiellement en céramique ou présenteront des structures en céramique à l'intérieur. Le rayonnement solaire provenant des concentrateurs sera dirigé sur les parois des conduits obliques de telle manière à augmenter leur température. L'augmentation de la température sera transmise au gaz circulant dans ces conduits obliques entraînant la dilatation et l'augmentation de l'énergie cinétique du gaz. Ces conduits jouent le rôle de la chambre annulaire de combustion d'un turboréacteur.
   Dans certains modes de réalisation, les parois des conduits obliques sont isolées du milieu extérieur, par exemple grâce à une chambre annulaire transparente au rayonnement solaire pour le plus large spectre possible Fig1.24. Cette chambre annulaire pourra être remplie d'un gaz isolant, tel que argon, xeon, azote, hélium, krypton, ou toute autre gaz ou mélange de gaz. Dans d'autres modes de réalisation, cette chambre sera maintenue sous vide. Pour limiter les échanges thermiques entre les différents éléments de la cycloturbine, les parois de certains éléments seront dédoublées Fig1.12-12-20-21, un gaz servant d'isolant entre les deux couches des parois. Dans un mode de réalisation encore plus préférentiel, un vide est maintenu entre les deux couches des parois des différents éléments ou dans la chambre annulaire transparente grâce à une aspiration résultant de l'écoulement des fluides au niveau des cheminées d'aspiration Fig1.25 selon le principe de Bernoulli.
2.2 La structure formant la cycloturbine sera disposée au centre d'un déflecteur faisant converger le rayonnement au niveau des parois des conduits obliques Fig1.26. Par exemple, le déflecteur formera préférentiellement une parabole (calotte d'une sphère ...) Fig2.26 comportant sur la face intérieure un matériau réfléchissant. Le déflecteur sera préférentiellement constitué de membranes synthétiques ou naturelles tendues sur une armature, comportant des éléments flexibles selon le principe de tension de la toile d'un parapluie. De manière préférentielle, le déflecteur sera constitué de deux membranes, une membrane réfléchissante fig2.27, par exemple une membrane synthétique contenant ou recouverte d'aluminium, telle que les couvertures de survie, et d'une membrane isolante Fig2.28 telle que les tissus Nomex (brand aramid fibree)/Kevlar ..., imperméabilisés sur la face extérieure. Chaque membrane est assemblée selon un patron leur conférant la structure de la calotte d'une sphère, par exemple par l'ajustement de pièces triangulaires Fig2.29 selon le principe d'une toile de parapluie. Les deux membranes sont assemblées l'une à l'autre Fig2.30, en laissant libres des fentes fig2.31 pour loger l'armature Fig2.32. L'armature sera constituée par exemple de tubes flexibles. Dans un mode préférentiel, l'armature pourra comporter également des tubes creux et flexibles fortement conducteurs de chaleur. Par exemple, chaque baleine d'armature sera constituée de faisceaux à deux ou trois éléments, par exemple, un tube creux fortement conducteur de chaleur en métal (cuivre, aluminium, ....) Fig2.33 et un ou deux tubes flexibles Fig2.34 par exemple en carbone. Dans certains modes de réalisation, les tubes creux conducteurs de chaleur Fig2.33, collés à la face inférieure de la membrane réfléchissante, sont reliés Fig2.38 par l'intermédiaire d'échangeurs thermiques à une turbine à vapeur Fig2.36, dont les entrées de vapeurs F2.37 sont éventuellement disposées en étoile. Un liquide ou fluide caloriporteur (eau, ammoniaque, tétrafluoroéthane, hydrochlorofluorocarbone ...) circulera dans les tubes creux conducteurs de chaleur, jusqu'au tuyau central des échangeurs, Fig2.38 par exemple, également disposés en étoile. Dans le tuyau périphérique des échangeurs Fig2.39 à partir du tuyau de sortie de la cycloturbine se ramifiant en étoile, circulera le gaz accéléré et échauffé par la cycloturbine. D'une part, la chaleur accumulée par les parois du déflecteur solaire permet un préchauffage du liquide caloriporteur circulant dans les tubes creux de la paroi du déflecteur, et d'autre part, la chaleur apportée dans l'échangeur thermique par le gaz provenant de la cycloturbine, permet de vaporiser le liquide caloriporteur. Les vapeurs obtenues sont alors introduites, tangentiellement à la paroi, dans laturbine à vapeur Fig 2. 36. L'axe de rotation de la turbine à vapeur sera couplé, solidaire ou commun à l'axe de rouet de la cycloturbine solaire.
   L'extrémité libre extérieure des tubes creux de la paroi du déflecteur solaire Fig2.33 est reliée à un tuyau, « tube périphérique » faisant le périmètre du déflecteur Fig2.40. Ce tube périphérique est alimenté en liquide caloriporteur par au moins une arrivée Fig2.41. La taille des baleines assemblées dans l'armature du déflecteur correspond à la taille de l'arc de la calotte sphérique de la parabole de telle manière qu'une fois l'armature mise en place dans les fentes, l'armature impose aux membranes une forme de parabole sphérique Fig2.26. Une fois structurée la parabole dévie la lumière à travers la chambre annulaire transparente Fig1.24, essentiellement au niveau des parois des conduits obliques Fig1.23 et d'un radiateur disposé au niveau de ces conduits Fig 1.42-43.
2.3) Dans un mode de réalisation encore plus avantageux, une lentille est disposé à l'aplomb du cône inversé du cyclone Fig1.4. Cette lentille sera constituée en tore Fig1.44 faisant converger la lumière en un anneau focalisé sur les parois des conduits obliques et leur radiateur Fig1.42-42. Dans un autre mode de réalisation, est disposé entre le déflecteur et le cyclone de la cycloturbine, une lentille parabolique Fig2. 45 permettant la convergence des rayons provenant du déflecteur au niveau de la paroi des conduits obliques Fig1.23 et de leur radiateur. Cette lentille parabolique sera constituée de plusieurs lobes permettant de faire converger le rayonnement en plusieurs points discrets Fig2.46. La lentille parabolique sera solidaire fig2.47 d'une lentille surplombant le cône, de la cycloturbine, cette dernière se substituant à la lentille tore initiale. La lentille surplombant le cône formera une rosette Fig2.48 par la combinaison de plusieurs sous-lentilles convergentes de manière à former une lentille capable de faire converger la lumière en un anneau de taches discrètes Fig2.46 focalisées sur les parois des conduits obliques et leur radiateur. L'ensemble des deux lentilles, solidaires entre elles Fig2.47, est supporté et solidaire à l'axe de rouet qui se prolonge au travers du cône du cyclone et ressort par le sommet de ce dernier, de telle manière qu'en tournant, l'axe fasse tourner le couple de lentilles rosette et parabolique. Le système de lentilles en tournant déplacera sur les conduits obliques et leur radiateur, les taches de convergence, permettant ainsi un échauffement et un refroidissement alternatifs des différents conduits. Cet éclairage alternatif des conduits obliques permettra d'une part, de limiter l'échauffement des conduits et d'autre part, d'instaurer un cycle dans les réactions de dilatation ou catalytique des gaz se produisant dans les conduits obliques. En effet, dans certains modes de réalisation, la face interne des conduits obliques est recouverte d'oxyde de titane ou d'oxyde d'autres métaux, et éventuellement comporte des matrices ou monolithes de structure poreuse, en nid d'abeille, en mousse, constituée de cordiérite, de carbure de silicium, de céramique... Ces différents matériaux peuvent être recouvert d'oxyde métallique tel que l'oxyde de Titane. Par exemple, les oxydes de Titane sont capables de catalyser la décomposition de gaz tel que la vapeur d'eau en H2 + 02. Cette décomposition en plus de produire de l'hydrogène et de l'oxygène permet d'augmenter la molarité du mélange gazeux ce qui permet ainsi d'augmenter la dilation du gaz dans la cycloturbine.... Durant le cycle de rotation les lentilles éclairent tour à tour les conduits obliques régénérant ainsi les catalyseurs qui ont réagit dans les conduits obliques non éclairés.
2.4) Le déflecteur sera avantageusement orienté vers le soleil. Dans un mode de réalisation encore plus avantageux, le déflecteur sera motorisé et articulé de manière à suivre la course du soleil et à offrir le meilleur rendement de réflexion de la lumière sur la cycloturbine solaire. Le mouvement de déflecteur sera préprogrammé ou défini à l'aide de capteurs photoélectriques, par exemple une couronne de cellules ou résistances photoélectriques disposées sur le mât de support du concentrateur. Au fur et à mesure de la course du soleil, la cellule en vis-à-vis du soleil indiquera la position la plus lumineuse grâce à la mesure du courant produit.
2.4) La cycloburbine et la turbine à vapeur couplées par un axe commun peuvent être directement ou indirectement couplées à un générateur électrique. Dans un mode de réalisation préférentiel, le couplage se fera au travers d'un circuit hydraulique Fig3.49 qui animera un moteur hydraulique Fig3.50 lui-même couplé à un générateur électrique Fig3.51. L'axe de la cycloturbine éventuellement couplé à celui de la turbine à vapeurs animera une pompe hydraulique Fig3.52 qui mettra sous pression le liquide de transmission. Ce type de couplage permet d'ajouter en dérivation ou en parallèle dans le circuit hydraulique plusieurs unités de cycloturbine mais également d'autres types d'unités tel que des l'hydrolienne et des éoliènes couplé hydrauliquement. Le circuit hydraulique comportera des valves anti-retour et/ou des vannes électriques Fig3.53 pour d'une part, empêcher les retours du fluide moteur et d'autre part, contrôler le nombre d'unités moteur actives dans le circuit hydraulique, afin d'ajuster la production électrique. Un couplage similaire pneumatique peut être réalisé.
2.5) Dans un mode de réalisation particulier, la cycloturbine sera hydrauliquement couplée à une hydrolienne. Dans un mode de réalisation préférentiel, l'hydrolienne sera de type cylindrique Savonius.
   Dans un mode encore plus préférentiel, afin d'augmenter le rendement de l'hydrolienne, le cylindre Fig3.54 sera composé de plusieurs unités solidaires Fig3.55 profilées à géométrie variable. Chaque unité de cylindres sera profilée en forme concave sur une face Fig3.56 pour favoriser l'écoulement de l'eau Fig3.58 et convexe sur l'autre Fig3.57 pour pouvoir être poussé par l'écoulement de l'eau. Les bords d'une unité de cylindres seront prolongés par des éléments mobiles, éventuellement articulés, mais préférentiellement souples tels que des membranes Fig3.60 (Kapton, tissus, kevlar, silicone vulcanisé, caoutchouc ...). Pour éviter le placage des membranes dans la cavité d'une unité de cylindres, lors de la remontée du courant par un demi cylindre (face profilée de l'unité dans le courant), des guides Fig3.59 (métal, carbone, fibre de verrre ...) limiteront le rabattement des membranes. Lorsque les unités d'un demi cylindre remontent le courant, les membranes se plaquent sur les guides et diminuent la résistance du demi cylindre remontant le courant. Lorsque les unités du cylindre sont poussées par le courant (face convexe dans le courant) les membranes se gonflent et augmentent la portance du demi cylindre.
2.6) Dans un mode de réalisation particulier des cycloturbines couplées à des hydroliennes cylindriques profilées à géométrie variable sont disposées sur une barge ou un radeau à l'ancre Fig3 ;61-62. L'alimentation en eau des turbines à vapeur des unités cycloniques se fait alors préférentiellement par prélèvement d'eau dans la mer ou la rivière Fig.3.63 où flotte l'embarcation.
2.7) Des électrovannes peuvent contrôler le nombre d'hydroliennes participant ou de cycloturbines participant à la compression du fluide hydraulique moteur. Toutefois dans un mode de réalisation préférentiel, lorsque les hydroliennes ne participent pas à la production directe de courant, leur travail est utilisé pour accumuler ou compresser du gaz dans le système d'accumulation d'énergie potentielle grâce à un circuit hydraulique parallèle.
2.8) Dans un mode de réalisation particulier, la cycloturbine Fig6.112 sera fixe et seul le déflecteur Fig6.113 sera mobile et sera positionné pour concentrer les rayonnements sur le radiateur 42 de la cycloturbine. Dans cette configuration, le déflecteur sera par exemple constitué de deux parties Fig6.114 solidaires Fig6.115, de manière à permettre la rotation du déflecteur dans un plan parallèle à l'axe 111 de la cycloturbine, avec pour centre de rotation le sommet 112 de la cycloturbine. Dans un mode de réalisation encore plus particulier, le déflecteur, par exemple constitué de deux parties, sera soit suspendu à Fig6.116, soit supporté par Fig6.117, un système d'arceaux motorisés Fig6.118 , complété par divers systèmes de rotules et de roulements, permettant la rotation du déflecteur dans un même plan, autour du sommet de la cycloturbine. La rotation du déflecteur autour de l'axe de la cycloturbine est éventuellement assurée par un autre moteur électrique et d'autres rotules et roulements. Le mouvement de rotation du déflecteur autour de l'axe de la cycloturbine combiné au mouvement autour du sommet de la cycloturbine, dans un même plan parallèle à l'axe de la cycloturbine, permet de suivre les mouvements du soleil. Les deux systèmes de suspension et de support peuvent être combinés.
3.1) En sortie de la turbine à vapeur, les vapeurs du fluide caloriporteur sont dirigées Fig4.67 vers un condensateur qui peut être un chauffe-eau thermodynamique. Le chauffe-eau thermodynamique comprend un vase d'expansion Fig4.68 contenu dans un réservoir d'eau Fig4.69 aux parois adiabatiques. Le vase permet l'expansion de la vapeur d'eau en sortie de la turbine à vapeur. La vapeur refroidie ou condensée passe alors dans un radiateur contenu dans le réservoir Fig4.70 le radiateur sera préférentiellement disposé dans la zone froide du réservoir, en dessous de l'interface eau chaude (haut) / eau froide (bas) formant le miroir. Lorsque la zone miroir dépasse la position du radiateur, déterminée par une sonde thermique disposée en dessous du radiateur Fig4.71, l'arrivée d'eau froide Fig4.72 et la sortie d'eau chaude Fig4.73, sont ouvertes Fig4.74 permettant ainsi d'évacuer le surplus d'eau chaude dans un deuxième réservoir Fig4.75 de stockage. Un fritté ou un brise-jet est installé au niveau de l'arrivée d'eau froide pour permettre un écoulement laminaire. Une sonde thermique Fig4.76 est située au niveau de la sortie d'eau chaude du premier réservoir permettant d'arrêter le transvasement. Dans le plafond du premier réservoir sera disposé un réservoir d'acétate de sodium Fig4.77 dont les parois sont conductrices de chaleur. Dans le réservoir d'acétate de sodium sera disposée une source d'ultrasons tel qu'un cristal piezzo éléctrique Fig4.78. Durant la phase lumineuse les cristaux d'acétate de sodium se dissolvent en absorbant de la chaleur. Durant la phase sombre du processus, la cristallisation de l'acétate de sodium, sous l'impulsion d'ultrasons, permettra de restituer la chaleur absorbée en chauffant une partie de l'eau contenue dans le réservoir et de la stocker dans le deuxième réservoir. En sortie du radiateur, une pompe hydraulique Fig4.79, animée par un mécanisme hydraulique pneumatique ou électrique, renvoie le fluide caloriporteur refroidi ou condensé vers le tuyau faisant le périmètre de la paroi du déflecteur pour un nouveau cycle. Dans un mode de réalisation préférentiel, le haut du réservoir de stockage sera constitué d'un piston mobile par exemple en polystyrène Fig4.80 isolé thermiquement Fig4.81 et éventuellement lesté permettant de faire varier le volume du réservoir de stockage en fonction de son remplissage en minimisant les échanges de chaleur des membranes plaquées contre la paroi du réservoir de stockage pour permettre l'évacuation de la surpression sans perte de chaleur. Dans d'autres modes de réalisation, le réservoir de stockage a un volume fixe, mais dispose d'électrovannes et/oude soupapes à pression, par exemple à bille Fig4.83 ou à ressort, en position haute qui s'ouvrent de manière transitoire lorsque le réservoir se rempli ou qu'il se vide. Dans certains modes de réalisation, tout ou partie des vannes soupapes du système sont animées par des ressorts à mémoire de forme qui ouvrent ou ferment les vannes soupapes en fonction des températures de l'eau ou des vapeurs d'eau à l'intérieur du réservoir. L'eau chaude produite pourra être utilisée pour restituer la chaleur durant la phase sombre ou comme eau chaude sanitaire.
3.2) Dans certains modes de réalisation, le gaz circulant dans la cycloturbine est de l'air atmosphérique aspiré à la base du tuyau externe de la cycloturbine Fig1.84 et rejeté en sortie d'échangeur Fig1.85.
3.3) Dans un mode de réalisation préférentiel, le gaz circulant dans la cycloturbine provient d'un cycle fermé. Par exemple, en sortie du collecteur des échangeurs thermiques Fig1.86 , les gaz provenant de la cycloturbine Fig5.87 sont injectés à l'entrée d'un éjecteur (convergent divergent) Fig5.88 comme fluide moteur. Le gaz secondaire de l'éjecteur, par exemple, le même gaz ou un mélange de gaz, sera refroidi à température ambiante et par exemple stocké dans un réservoir à membrane souple Fig5.89. En sortie d'éjecteur, le gaz sera comprimé et refroidi voire liquéfié. Le gaz comprimé et refroidi voire liquéfié, éventuellement après passage Fig5.90 dans un condensateur qui peut être un chauffe-eau thermodynamique Fig5.91, est alors introduit Fig5.92 dans un réservoir Fig5.93 qui permettra d'augmenter son énergie potentielle sous l'action du rayonnement solaire ou par échange thermique avec un autre gaz. Cette augmentation d'énergie potentielle se fait soit en augmentant la pression et la température à volume constant, soit en augmentant le volume et la température à pression faiblement variable. Lorsque le rayonnement solaire ne sera plus disponible l'énergie potentielle contenue dans le gaz sera utilisée par exemple par un moteur ou une turbine pneumatique Fig5.94 qui anime une pompe hydraulique Fig5.52 pour produire du courant électrique. Après passage dans un condensateur, par exemple un chauffe-eau thermodynamique, le gaz pourra être stocké dans un réservoir à paroi souple.
   Dans le cas d'utilisation de l'air le milieu extérieur se substitue au réservoir à paroi souple.
3.4) Dans un mode de réalisation particulier, le gaz utilisé dans le cycle de la cycloturbine est te CO2. En sortie d'éjecteur, le CO2 pourra se présenter par exemple sous forme supercritique,
3.5) Dans certains modes de réalisation, les gaz utilisés dans le cycle de la cycloturbine est la vapeur d'eau, le tétrafluoroéthane, hydrochlorofluorocarbone.
3.6) En sortie d'éjecteur ou de condensateur un détendeur et un évaporateur permettent de produire de l'air froid en captant la chaleur du milieu extérieur.
4.1 Dans certains modes de réalisation, le système d'accumulation d'énergie cinétique est constitué d'un enceinte à paroi élastique incluse dans un conteneur de protection. Dans un mode de réalisation préférentiel, le système d'accumulation d'énergie potentielle des gaz est constitué d'une enceinte à volume variable comprenant une enceinte cylindrique Fig4.95 dont l'ouverture est fermée par un piston mobile Fig4.96, le piston étant ajusté au cylindre de manière à ce qu'il n'y ait pas de fuites. Des jupes Fig4.97 (silicone vulcanisé ou teflon) ainsi qu'une paroi transparente au rayonnement solaire Fig4.98 permettent d'assurer un surcroît d'étanchéité Fig4.98. La course du piston n'atteint pas le fond du cylindre Fig4.99 de manière à définir un volume permettant à l'enceinte de recevoir, au travers d'une valve anti-retour Fig4.100, le gaz comprimé ou liquéfié en sortie d'un éjecteur sans que le piston ne se déplace. L'ensemble, cylindre et piston sont constitués d'une double paroi adiabatique permettant d'isoler thermiquement le système d'accumulation d'énergie potentielle du gaz. La paroi du piston donnant sur l extérieur Fig4.98 sera transparente au rayonnement solaire de manière à ce qu'en traversant la paroi d'isolement le rayonnement solaire puisse chauffer la deuxième paroi opaque du piton permettant ainsi de transférer la chaleur au gaz contenu dans le cylindre. Entre les parois un gaz ou le vide permettra l'isolation thermique. Sous l'action de la température, le gaz contenu dans le cylindre éventuellement après évaporation des liquides présents pourra se dilater et repousser le piston à pression quasi constante. La masse du piston sera définie de manière à ce qu'elle compense la pression souhaitée pour le gaz. Dans certains modes de réalisation, le piston sera assisté par un ressort Fig4. 101 et/ou par un tenseur de constante de raideur définie Fig4.102. Le ressort sera préférentiellement un ressort à mémoire de forme qui se contractera dès que le gaz aura atteint une température définie de manière à augmenter la pression du gaz. Une lentille convergente 103 sera disposée au-dessus du système d'accumulation d'énergie potentielle de manière à faire converger la lumière, au travers de la paroi externe, sur la paroi interne du piston quand il est en position basse. Pour diminuer la dilatation du gaz tout en accumulant de la chaleur, le fond du cylindre comprendra un réservoir rempli d'une solution saturée d'acétate de sodium cristallisé Fig4.103 ou d'une autre solution de sels ayant la propriété de cristalliser en émettant de la chaleur et de fondre en absorbant. Ce réservoir comprenant des moyens de déclencher la cristallisation de l'acétate de sodium, tels que des sources à ultrasons (cristal piezzo électrique). Dans certains modes de réalisation, la paroi externe du cylindre sera transparente et des déflecteurs permettront de faire converger, au travers de la paroi externe, sur la paroi interne du cylindre le rayonnement solaire. D'une manière générale, les faces des parois internes exposées au rayonnement seront noires (de peinture noire, Chrome noir, CERMET), afin de mieux absorber l'énergie solaire thermique.
   Dans certains modes de réalisation, pour éviter les fuites de gaz, le système d'accumulation d'énergie potentielle des gaz comprendra une paroi souple, ou chaussette Fig4.106, en matériau de préférence synthétique et souple, imperméable au gaz contenu dans le système. Les extrémités de la chaussette sont fermées et fixées sur le piston et le fond du cylindre (élément rigide) de manière à former un soufflet. Les deux éléments rigides fermant la chaussette sont reliés entre eux par un ressort ou une courroi élastiques, (élément de rappel), de constante de raideur k telle qu'à l'allongement donné de la chaussette, la force de rappel de l'élément de rappel et le poids du piston compensent la pression du gaz. Le matériau souple de la chaussette est renforcé par le ressort permettant de laisser la lumière de la chaussette toujours ouverte et le déploiement progressif en soufflet en fonction de l'augmentation la pression. En mode accumulation, le gaz, contenu dans l'enceinte à volume variable, s'échauffe, ce qui le dilatera en repoussant le piston et/ou en étirant ou comprimant les tenseurs et ressorts solidaires au piston, la pression étant compensée par le poids du piston et l'étirement des tenseurs et la variation de volume. De plus, les sels d'acétate de sodium contenus dans le réservoir se dissolvent en accumulant de la chaleur en minimisant ainsi l'augmentation de température donc l'augmentation de pression. En l'absence de rayonnement solaire, la valve Fig4.107 de sortie de l'enceinte à volume variable est ouverte et permet au gaz de s'échapper sous l'action du poid du piston et/ou et des forces de rappel des tenseurs et des ressorts. Lors de la détente du gaz vers l'extérieur, le volume de l'enceinte diminue grâce au rappel du piston. Ceci permet de limiter la chute de température et de pression due aux détentes d'un gaz. Lorsque le gaz est trop refroidi, le cristal piezzo électrique crée une instabilité à l'intérieur de la solution d'acétate de sodium saturée, dissoute sous l'action de la chaleur, qui cristallise de nouveau en libérant la chaleur accumulée durant la phase de dissolution. Ceci permet d'augmenter le taux de dilation du gaz et son expulsion au travers de la valve de sortie. En sortant par la valve Fig4.107 le gaz entraîne soit un moteur pneumatique ou une turbine ou un moteur à air comprimé Fig5.94 couplés directement ou indirectement (circuit hydraulique) à un générateur électrique. Dans un mode encore plus préférentiel, le haut du cylindre sera fermé par une paroi transparente qui emprisonnera un gaz inerte (argon xeon helium..) entre ladite paroi et le piston. La remontée du piston et l'augmentation de température amplifieront l'action de rappel des ressorts et divers tenseurs utilisés.

### LEGENDES DE L'ENSEMBLE DES FIGURES

1) tuyau externe de la turbine cyclonique
2) tuyau externe paroi interne
3) ) tuyau externe paroi externe
4) cône inversé cyclonique
5) cône inversé paroi externe
6) cône inversé paroi interne
7) disque du rouet
8) trou central du rouet
9) axe du rouet
10) tuyau d'axe
11) tuyau d'axe paroi externe
12) tuyau d'axe paroi interne
13) appui de base du rouet constitué d'une roulement à bille
14) hélices ou aubes disposées en rotor central au rouet
15) aubes fixes formant le stator
16) turbine centrale
17) ailette de rouet
18) carénage du rouet
19) tuyau de sortie du cyclone
20) tuyau de sortie du cyclone paroi externe
21) tuyau de sortie du cyclone paroi interne
22) appui de sommet du rouet constitué d'une roulement à bille
23) conduite oblique d'entrée des gaz dans le cyclone et de leur chauffage.
24) chambre annulaire transparente au rayonnement solaire
25) cheminée d'aspiration
26) déflecteur solaire formant une parabole ( calotte d'une sphère )
27) membrane supérieure réfléchissante du déflecteur solaire
28) membrane inférieure isolante du déflecteur solaire
29) pièce triangulaire d'assemblage des membranes selon le principe d'une toile de parapluie
30) assemblage des deux membranes du déflecteur
31) fente libre pour loger l'armature dans les membranes assemblées du déflecteur
32) baleine d'armature constituée d'un faisceau de trois tubes : un tube creux fortement conducteur de chaleur Fig2.33 et deux tubes flexibles
33) tube creux fortement conducteur de chaleur en métal (cuivre, aluminium, etc.) pour conduire les gaz
34) tubes flexibles en carbone ou en fibre naturelle telle que des fibres de bambou pour structurer la membrane assemblée
35) échangeur thermique entre les tubes creux de l'armature du déflecteur et le tuyau de sortie du cyclone.
36) turbine à vapeur
37) entrée de vapeur disposée en étoile
38) tuyau central d'échangeur connectant les tuyau creux conducteur de chaleur du déflecteur.
39) tuyau périphérique des échangeurs
40) tuyau faisant le périmètre du déflecteur reliant l'extrémité libre extérieure des tubes conducteurs 33 du déflecteur, aux échangeurs thermiques
41) alimentation en liquide caloriporteur du tuyau 40 faisant le périmètre du déflecteur
42) radiateur disposé au niveau des conduits obliques
43) passage des conduits obliques au travers du radiateur de conduits obliques
44) lentille en tore
45) lentille parabolique à plusieurs lobes
46) point de convergence du rayonnement
47) solidarité entre lentille parabolique et rosette
48) lentille en rosette
49) circuit hydraulique
50) moteur hydraulique
51) alternateur, dynamo ...
52) pompe hydraulique
53) valve anti-retour ou vannes électriques
54) cylindre d'hydrolienne Savonius composé de plusieurs éléments profilés à géométrie variable.
55) unité solidaire composant le cylindre
56) face concave d'un élément profilé sur un demi cylindre.
57) face convexe d'un élément profilé sur un demi cylindre.
58) sens de circulation du courant
59) guide pour la membrane prolongeant les bords des unités
60) membrane prolongeant le bord d'une unité d'un demi cylindre.
61) radeau ou barge
62) flotteur
63) prise d'eau
64) système d'orientation des cycloturbines
65) alimentation en eau des turbines à vapeur et des échangeurs et des conduits des déflecteurs.
66) échappement de vapeur des turbines à vapeur
67) conduit de sortie de turbine à vapeur et d'entrée de vase d'expansion
68) vase d'expansion
69) réservoir aux parois adiabatiques
70) radiateur ou condensateur
71) sonde thermique disposé en dessous du radiateur 69
72) arrivée d'eau froide
73) sortie d'eau chaude
74) électrovanne
75) réservoir de stockage
76) sonde thermique de la sortie d'eau chaude
77) réservoir d'acétate de sodium aux parois sont conductrices de chaleur
78) source à ultrasons
79) pompe hydraulique
80) piston mobile du réservoir de stockage en polystyrène
81) paroi d'isolation
82) membrane formant un joint d'isolation
83) soupape à bille
84) entrée tuyau externe de la cycloturbine
85) sortie des gaz de la cycloturbine du tuyau externe de l'échangeur thermique
86) collecteur de cycloturbines en sortie d'échangeur thermique
87) conduite reliant la sortie du collecteur des échangeurs thermiques à l'entrée d'un éjecteur (convergent divergent)
88) éjecteur (convergent divergent)
89) réservoir à paroi souple de gaz secondaire
90) conduit reliant la sortie de l'éjecteur à chauffe-eau thermodynamique
91) chauffe-eau thermodynamique
92) conduit reliant la sortie du chauffe-eau thermodynamique
93) enceinte à volume variable contraint
94) moteur ou turbine pneumatique
95) enceinte cylindrique au parois adiabatique
96) piston mobile
97) jupe Fig4.97 (silicone vulcanisé ou teflon) d'étanchéité
98) paroi transparente d'étanchéités
99) cale de piston
100) valve antiretour
101) ressort à mémoire de forme.
102) tenseur élastique
103) lentille convergente
104) réservoir rempli dune solution saturée d'acétate de sodium
105) cristal piezzo électrique
106) chaussette
107) valve de sortie
108) paroi transparente fermant le haut du cylindre
109) gaz emprisonné entre le piston et la paroi transparente fermant le cylindre
110) tête cycloturbine
111) axe cycloturbine
112) cycloturbine fixe
113) déflecteur mobile
114) demi-déflecteur
115) solidarité entre demi-déflecteur
116) arceaux de suspension
117) arceaux de support
118) moteur pas à pas
119) rotules et roulements

## Revendications

1. Procédé de production et de stockage d'énergies électrique et thermique d'origine solaire, **caractérisé en ce qu'**il comprend :
a) une phase lumineuse qui comporte la production d'une énergie cinétique et d'une énergie thermique par l'accélération et le chauffage d'un gaz au travers au moins d'une cycloturbine sous l'action d'un rayonnement solaire, l'utilisation de ces énergies pour produire de l'électricité tout en refroidissant, voire liquéfiant ledit gaz, en accumulant une partie des énergies du gaz dans au moins un réservoir comprenant au moins un compartiment d'eau (69) et au moins un compartiment d'une solution saturée en acétate de sodium (77), un stockage d'une énergie d'un rayonnement solaire, en une énergie potentielle par chauffage dudit gaz en condition de volume variable dans un accumulateur thermique solaire à volume variable (96) et,
b) une phase sombre, où l'énergie stockée dans l'accumulateur thermique solaire et le réservoir est utilisé pour produire de l'énergie électrique et thermique.

2. Procédé selon la revendication 1 **caractérisé en ce que** la cycloturbine soit couplée avec au moins une turbine à vapeur.

3. Procédé selon la revendication 1 et 2 **caractérisé en ce qu'**au moins une cycloturbine et au moins une turbine à vapeur soient couplées hydrauliquement avec au moins une structure hydrolienne.

4. Procédé selon la revendication 1 et 2 **caractérisé en ce qu'**au moins une cycloturbine et au moins une turbine à vapeur soient couplées hydrauliquement avec au moins une structure éolienne

5. Procédé selon la revendication 1 **caractérisé en ce que** la cycloturbine comprend des tubes emboîtés, au moins un cyclone, au moins un rotor, des stators, au moins un rouet percé d'un trou en son centre, un axe solidaire au rouet étant positionné au centre du trou, l'axe comportant des aubes orientées en sens inverse des ailettes du rouet, des conduits obliques capables d'orienter un gaz à l'intérieur de cyclones, des moyens pour faire converger un rayonnement solaire sur lesdits conduits obliques.

6. Procédé selon la revendication 2 **caractérisé en ce que** des alimentations de vapeur de la turbine à vapeur soient disposées en étoile.

7. Procédé selon la revendication 3 et 4 **caractérisé en ce que** l'hydrolienne ou l'éolienne soit cylindrique (54) de géométrie variable (55) et constituée de plusieurs unités solidaires où chaque unité comprend une partie profilée d'une face concave (56) et d'une face convexe (57) et une partie mobile (60), ladite partie mobile étant préférentiellement composée d'une membrane souple guidée par des guides flexibles (59).

8. Procédé selon la revendication 1 **caractérisé en ce que** l'accumulateur thermique solaire à volume variable, comprend un cylindre (95), au moins un piston (96), au moins une chaussette (106) formant un soufflet avec le fond de l'enceinte et le piston, au moins un tenseur (101) (102) tel qu'un ressort à mémoire de forme, des moyens pour faire converger un rayonnement solaire à la surface du piston et éventuellement du cylindre.

## Patentansprüche

1. Verfahren zum Erzeugen und Speichern von elektrischer und thermischer Solarenergie,
**dadurch gekennzeichnet, dass** es umfasst:
a) eine Lichtphase, die das Erzeugen einer kinetischen Energie und einer thermischen Energie umfasst durch das Beschleunigen und Erwärmen eines Gases durch wenigstens eine Cycloturbine hindurch unter der Einwirkung einer Sonnenstrahlung, die Verwendung dieser Energien zum Erzeugen von Strom durch Abkühlen, ja sogar Verflüssigen, des Gases und Speichern eines Teils der Gasenergien in wenigstens einem Behälter mit wenigstens einer Kammer (69) mit Wasser und wenigstens einer Kammer (77) mit einer gesättigten Lösung aus Natriumacetat, das Speichern einer Energie aus einer Sonnenstrahlung als eine potenzielle Energie durch Erwärmen des Gases unter veränderbaren Volumenbedingungen in einem Solarwärmespeicher mit veränderbarem Volumen (96), und
b) eine Dunkelphase, in der die im Solarwärmespeicher und im Behälter gespeicherte Energie zum Erzeugen von elektrischer und thermischer Energie genutzt wird.

2. Verfahren nach Anspruch 1,
**dadurch gekennzeichnet, dass** die Cycloturbine mit wenigstens einer Dampfturbine gekoppelt ist.

3. Verfahren nach Anspruch 1 und 2,
**dadurch gekennzeichnet, dass** wenigstens eine Cycloturbine und wenigstens eine Dampfturbine mit wenigstens einer Unterwasserturbinenanlage hydraulisch gekoppelt sind.

4. Verfahren nach Anspruch 1 und 2,
**dadurch gekennzeichnet, dass** wenigstens eine Cycloturbine und wenigstens eine Dampfturbine mit wenigstens einer Windkraftanlage hydraulisch gekoppelt sind.

5. Verfahren nach Anspruch 1,
**dadurch gekennzeichnet, dass** die Cycloturbine aufweist zusammengefügte Rohre, wenigstens einen Zyklon, wenigstens einen Rotor, Statoren, wenigstens ein mit einem Loch in der Mitte versehenes Rad, wobei eine mit dem Rad fest verbundene Achse in der Mitte des Lochs positioniert ist, wobei die Achse Schaufeln umfasst, die in entgegengesetzter Richtung zu den Rippen des Rads gerichtet sind, schräge Leitungsrohre, die ein Gas innen in die Zyklone zu leiten vermögen, Mittel zum Konvergieren einer Sonnenstrahlung auf den schrägen Leitungsrohren.

6. Verfahren nach Anspruch 2,
**dadurch gekennzeichnet, dass** die Dampfzuführungen der Dampfturbine sternförmig angeordnet sind.

7. Verfahren nach Anspruch 3 und 4,
**dadurch gekennzeichnet, dass** die Unterwasserturbine oder die Windturbine zylindrisch (54) mit veränderlicher Geometrie (55) sind und aus mehreren fest miteinander verbundenen Einheiten gebildet sind, von denen jede Einheit einen profilierten Teil mit einer konkaven Seite (56) und einer konvexen Seite (57) und einen beweglichen Teil (60) aufweist, wobei der bewegliche Teil vorzugsweise aus einer elastischen Membran gebildet ist, die von flexiblen Führungen (59) geführt ist.

8. Verfahren nach Anspruch 1,
**dadurch gekennzeichnet, dass** der Solarwärmespeicher mit veränderbarem Volumen einen Zylinder (95), wenigstens einen Kolben (96), wenigstens eine Tülle (106), die mit dem Boden des Gehäuses und dem Kolben einen Balg bildet, wenigstens einen Spanner (101) (102), wie etwa eine Feder mit Formgedächtnis, Mittel zum Konvergieren einer Sonnenstrahlung auf der Oberfläche des Kolbens und gegebenenfalls des Zylinders umfasst.

## Claims

1. A method of producing and storing electrical and thermal energy of solar origin, the method being **characterized in that** it comprises:
a) a light stage that comprises producing kinetic energy and thermal energy by heating and accelerating a gas through at least one cycloturbine under the action of solar radiation, using these energies for producing electricity while cooling or even liquefying said gas, accumulating a portion of the energy of the gas in at least one tank having at least one compartment (69) containing water and at least one compartment (77) containing a saturated solution of sodium acetate, and storing solar radiation energy as potential energy by heating said gas in a variable-volume condition in a variable-volume solar thermal accumulator (96); and
b) a dark stage in which the energy stored in the solar thermal accumulator and the tank is used to produce electrical and thermal energy.

2. A method according to claim 1, **characterized in that** the cycloturbine is coupled with at least one steam turbine.

3. A method according to claims 1 and 2, **characterized in that** at least one cycloturbine and at least one steam turbine are hydraulically coupled with at least one tidal turbine structure.

4. A method according to claims 1 and 2 **characterized in that** at least one cycloturbine and at least one steam turbine are hydraulically coupled with at least one wind turbine structure.

5. A method according to claim 1, **characterized in that** the cycloturbine has nested tubes, at least one cyclone, at least one rotor, stators, at least one impeller pierced by a central hole, a shaft secured to the impeller being positioned in the center of the hole, the shaft having blades oriented in the opposite direction to the fins of the impeller, oblique ducts capable of orienting a gas inside cyclones, and means for causing solar radiation to converge on said oblique ducts.

6. A method according to claim 2, **characterized in that** steam feeds of the steam turbine are arranged in a star configuration.

7. A method according to claims 3 and 4, **characterized in that** the tidal or wind turbine is cylindrical (54) and of variable geometry (55), being made up of a plurality of securely connected units in which each unit has a portion streamlined with a concave face (56) and a convex face (57), and a movable portion (60), said movable portion preferably being made up of a flexible diaphragm guided by flexible guides (59).

8. A method according to claim 1, **characterized in that** the variable-volume solar thermal accumulator comprises a cylinder (95), at least one piston (96), at least one sleeve (106) co-operating with the bottom of the enclosure and with the piston to form a bellows, at least one tensioner (101, 102) such as a shape memory spring, and means for causing solar radiation to converge on the surface of the piston and possibly also of the cylinder.
